# EUROPÄISCHE PATENTSCHRIFT

(11) **EP 2 100 012 B1**
(45) Veröffentlichungstag und Bekanntmachung des Hinweises auf die Patenterteilung: **30.06.2010**
(21) Anmeldenummer: 07821393.1
(22) Anmeldetag: 16.10.2007
(51) Int. Cl.: F01N 3/022, B01D 39/20, B01D 63/06, C04B 38/00

(54) **DURCH EXTRUDIEREN HERGESTELLTES FILTERELEMENT ZUR FILTERUNG VON ABGASEN EINER DIESEL-BRENNKRAFTMASCHINE**
FILTER ELEMENT WHICH IS PRODUCED BY EXTRUSION FOR FILTERING EXHAUST GASES OF A DIESEL INTERNAL COMBUSTION ENGINE
ÉLÉMENT FILTRANT FABRIQUÉ PAR EXTRUSION, POUR LA FILTRATION DES GAZ D'ÉCHAPPEMENT D'UN MOTEUR DIESEL À COMBUSTION INTERNE

(30) Priorität: 05.12.2006 DE 102006057280
(43) Veröffentlichungstag der Anmeldung: 16.09.2009
(73) Patentinhaber: Robert Bosch GmbH, 70442 Stuttgart (DE)
(72) Erfinder: SULZBERGER, Klaus-Dieter, 71701 Schwieberdingen (DE); KOMORI, Teruo, 70378 Stuttgart (DE); HAUBER, Thomas, 73776 Altbach (DE)
(86) Internationale Anmeldenummer: PCT/EP2007/061027
(87) Internationale Veröffentlichungsnummer: WO 2008/068102

(56) Entgegenhaltungen:
- US-A1- 2002 130 447

## Beschreibung

### Stand der Technik

Die Erfindung betrifft ein Verfahren zur Herstellung eines Filterelements, insbesondere für ein Abgassystem einer Brennkraftmaschine, nach dem Oberbegriff des Anspruchs 1. Solche durch Extrudieren hergestellten Filterelemente mit einer Eintrittsfläche und einer Austrittsfläche, mit einer Vielzahl von Eintrittskanälen und mit einer Vielzahl von Austrittskanälen sind hinlänglich bekannt. Die Eintrittskanäle und die Austrittskanäle sind durch eine Filterwand aus einem offenporigen Material getrennt. Beim Durchströmen des Filterelements tritt das zu reinigende Abgas von den Eintrittskanälen in die Austrittskanäle, indem es durch die Filterwände strömt. Damit das zu reinigende Abgas zwangsweise durch die Filterwände strömen muss, muss der Spalt zwischen dem Filterelement und dem Gehäuse erstens möglichst klein sein und zweitens durch geeignete Materialien gasdicht abgedichtet werden.

Üblicherweise ist das Gehäuse rohrförmig ausgebildet. Da jedoch herkömmliche Filterelemente nach dem Brennen nicht rund sind, muss der Spalt zwischen dem kreisrunden Gehäuse und dem Filterelement relativ groß gewählt werden. Wenn der Spalt zwischen Filterelement und Gehäuse ungleich groß ist, kann er nur sehr aufwändig abgedichtet werden. Deshalb wird vereinzelt dazu übergegangen, das Filterelement nach dem Brennen zylindrisch zu schleifen. Beide Alternativen sind sehr kostenaufwändig und stehen einer Anwendung bei großen Serien schon aus diesem Grund entgegen.

Die US 2002/0130447 beschreibt ein Verfahren zur Herstellung eines Keramikfilters, bei dem ein Grünkörper verwendet wird, dessen Radius mindestens um 9% größer ist als der festgelegte Radius des späteren Filterkörpers.

### Offenbarung der Erfindung

Der Erfindung liegt die Aufgabe zugrunde, ein Verfahren zur Herstellung eines Filterelement bereitzustellen, das einfacher, zuverlässiger und kostengünstiger dichtend im dem Gehäuse befestigt werden kann. Diese Aufgabe wird erfindungsgemäß mittels eines Verfahrens zur Herstellung eines Filterelements, insbesondere zur Filterung von Abgasen einer Diesel-Brennkraftmaschine, mit einer Eintrittsfläche und einer Austrittsfläche, mit einer Vielzahl von Eintrittskanälen und mit einer Vielzahl von Austrittskanälen, wobei die Eintrittskanäle und die Austrittskanäle durch eine Filterwand aus einem offenporigen Material getrennt sind, und wobei das Filterelement durch Extrudieren und eine anschließende Wärmebehandlung hergestellt wird, dadurch gelöst, dass der extrudierte Rohling des Filterelements an den Umfangswinkeln, in denen die Filterwände im Wesentlichen radial verlaufen, einen größeren Durchmesser aufweist als an den Umfangswinkeln, in denen ein Radius im Wesentlichen entlang der Winkelhalbierenden zwischen den Filterelementen verläuft.

Es hat sich bei der Untersuchung herkömmlicher Filterelemente herausgestellt, dass das fertig gebrannte Filterelement an den Umfangswinkeln, in denen die Filterwände radial verlaufen, einen kleineren Durchmesser hat als an den Umfangswinkeln, in denen ein Radius im Wesentlichen entlang der Winkelhalbierenden zwischen den Filterwänden verläuft.

Erfindungsgemäß ist nun vorgesehen, diesen unerwünschten Effekt, der sich aus dem unterschiedlichen Schwindverhalten des Rohlings beim Brennen herrührt, durch eine entsprechende Gestaltung des Rohlings beim Extrudieren entgegenzuwirken. Dadurch kann die Zylindrizität eines erfindungsgemäßen Filterelements nach dem Brennen gegenüber herkömmlichen Filterelementen deutlich verbessert werden, so dass erstens ein Schleifen des Filterelements entfallen kann und zweitens der Spalt zwischen Filterelement und Gehäuse deutlich verringert werden kann. Dadurch wird die Abdichtung zwischen Filterelement und Gehäuse vereinfacht und verbessert. Der Unterschied zwischen dem größeren Durchmesser und dem kleineren Durchmesser des Rohlings eines Filterelements nach dem Extrudieren wird vorteilhafter Weise in Abhängigkeit der Anordnung der Filterwände und des Durchmessers des Filterelements so gewählt, dass nach dem Brennen der Querschnitt des Filterelements die gewünschte Form aufweist. Bei einem zylindrischen Filterelement ist dies naturgemäß ein kreisrunder Querschnitt. Allerdings kann das erfindungsgemäße Filterelement auch beispielsweise bei Filterelementen mit quadratischem Querschnitt und Gehäusen mit quadratischem Querschnitt ebenfalls mit Erfolg angewendet werden.

Das erfindungsgemäße Filterelement hat zusätzlich den Vorteil, dass seine Herstellung nicht mit erhöhten Kosten verbunden ist, da letztendlich nur sehr geringe Zusatzkosten bei der Herstellung des zum Extrudieren der Rohlinge erforderliche entstehen.

Ein solcherart gestaltetes Extrusionswerkzeug kann in eine bereits bestehende Produktionseinrichtung ohne Weiteres integriert werden, so dass auch die Umstellung von bereits in Serie gefertigten Filterelementen auf die erfindungsgemäße Geometrie der Rohlinge ohne Weiteres und im Zuge eines regelmäßigen Werkzeugwechsels erfolgen kann.

Bei einem Filterelement, dessen Filterwände einen Winkel von etwa 90° einschließen und das Filterelement einen im Wesentlichen kreisförmigen Querschnitt aufweist, ist vorgesehen, dass der extrudierte Rohling des Filterelements an den Umfangswinkeln, in denen die Filterwände im Wesentlichen radial verlaufen, einen größeren Durchmesser aufweist als an den Umfangswinkeln, in denen ein Radius im Wesentlichen entlang der Winkelhalbierenden zwischen den Filterwänden verläuft.

Dadurch ist es möglich, ein Filterelement herzustellen, dessen Querschnitt nach dem Brennen mit ausreichender Genauigkeit kreisrund ist, so dass das Filterelement ohne Weiteres in ein kreisrundes Gehäuse eingeschoben und dort abgedichtet werden kann.

Es ist weiter von Vorteil, wenn die Bereiche des Filterelements mit einem größeren Durchmesser und die Bereiche mit einem kleinen Durchmesser stufenlos ineinander übergehen, da Sprünge oder Stufen im Durchmesser des Filterelements wiederum zu einer ungünstigen Ausbildung des Spalts zwischen Filterelement und Gehäuse führen würden.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

### Kurze Beschreibung der Zeichnungen

Es zeigen:
- Figur 1: eine schematische Darstellung einer Brennkraftmaschine mit ei- ner Abgasnachbehandlungseinrichtung;
- Figur 2: ein Filterelement im Längsschnitt;
- Figur 3: ein Querschnitt durch einen Rohling eines Filterelements nach dem Extrudieren und
- Figur 4: ein Querschnitt durch das Filterelement gemäß Figur 3 nach der Wärmebehandlung.

### Ausführungsformen der Erfindung

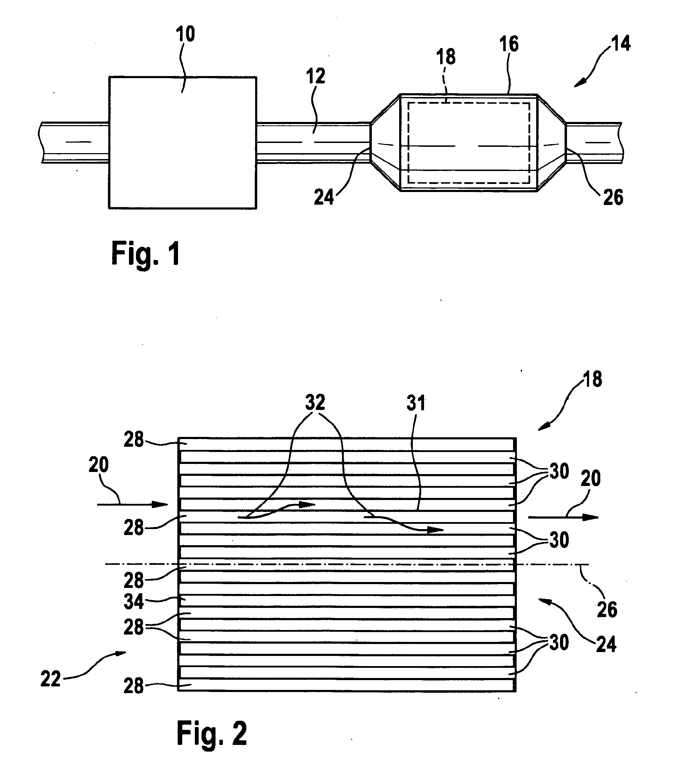

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert. Dies ist insbesondere bei DieselBrennkraftmaschinen erforderlich, um gesetzliche Bestimmungen einzuhalten.

Die Filtereinrichtung 14 umfasst ein zylindrisches Gehäuse 16, in dem eine im vorliegenden Ausführungsbeispiel rotationssymmetrisches, insgesamt ebenfalls zylindrisches Filterelement 18 angeordnet ist.

In Figur 2 ist ein Querschnitt durch ein erfindungsgemäßes Filterelement 18 dargestellt. Das Filterelement 18 kann beispielsweise ist als extrudierter Formkörper aus einem keramischen Material, wie zum Beispiel Cordierit, hergestellt werden.

Das Filterelement 18 wird in Richtung der Pfeile 20 von nicht dargestelltem Abgas durchströmt. Eine Eintrittsfläche hat in Figur 2 das Bezugszeichen 22, während eine Austrittsfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der Austrittsfläche 24 verschlossen. Die Verschlussstopfen sind in Figur 2 ohne Bezugszeichen dargestellt. Im Gegensatz dazu sind die Austrittskanäle 30 an der Austrittsfläche 24 offen und im Bereich der Eintrittsfläche 22 verschlossen.

Der Strömungsweg des ungereinigten Abgases führt also in einen der Eintrittskanäle 28 und von dort durch eine Filterwand 31 in einen der Austrittskanäle 30. Exemplarisch ist dies durch Pfeile 32 dargestellt.

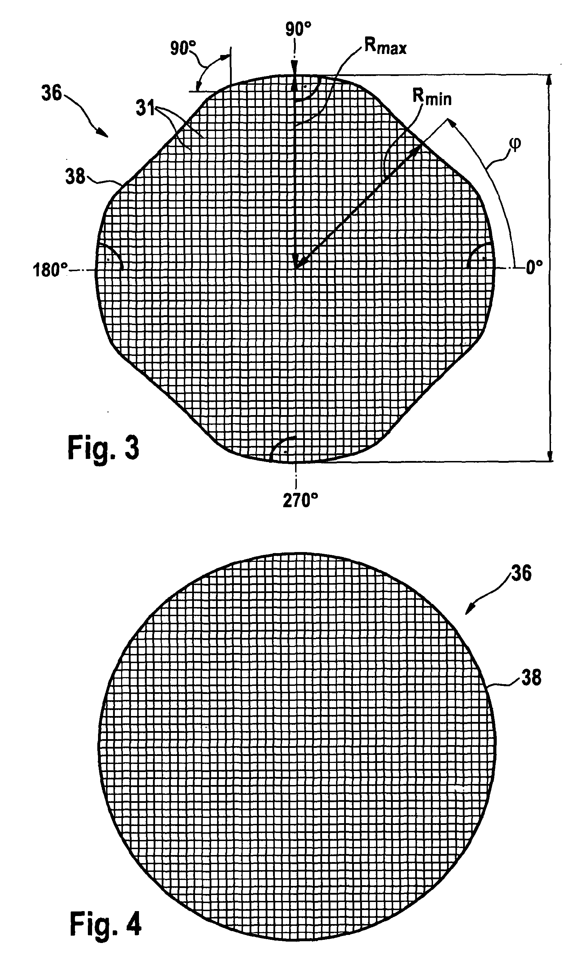

In Figur 3 ist ein Rohling 36 eines Filterelements nach dem Extrudieren und vor einer anschließenden Wärmebehandlung im Querschnitt dargestellt. Die Filterwände 31 und mit ihnen die Eintrittskanäle 28 und die Austrittskanäle 30 sind aus Gründen der Übersichtlichkeit nicht über den gesamten Querschnitt des Rohlings 36 dargestellt. Für die Erfindung von Bedeutung ist, dass die Filterwände 31 zwei Hauptrichtungen haben, die einen Winkel von 90° zueinander einschließen. Die erste Hauptrichtung entspricht einem Winkel von 0° in dem in Figur 3 eingetragenen Polarkoordinatensystem. Der Ursprung dieses Koordinatensystems liegt im Mittelpunkt des Querschnitts des Rohlings 36.

Aus Figur 3 wird deutlich, dass bei Umfangswinkeln ϕ von 0°, von 90°, von 180° und von 270° die Filterwände 31 im Wesentlichen radial verlaufen. Eine Außenfläche 38 des Rohlings 36 verläuft an den genannten Umfangswinkeln in einem rechten Winkel mit den radialen Filterwänden 31. Bei einem Umfangswinkel ϕ von 45° liegt ein Radius R in der Winkelhalbierenden zwischen den Hauptrichtungen der Filterwände 31. Dies führt zwangsläufig dazu, dass bei einem Umfangswinkel von 45° die Filterwände 31 unter einem Winkel von etwa 45° zu der Außenfläche 38 des Rohlings verlaufen.

Bei der Herstellung solcher Rohlinge und dem anschließenden Brennen hat sich gezeigt, dass der Schwund in radialer Richtung beim Brennen des Rohlings nicht gleich ist. Der Schwund in radialer Richtung hängt von dem Winkel zwischen Filterwänden 31 und der Außenfläche 38 des Filterelements 18 ab. Infolgedessen ist ein fertig gebranntes Filterelement, dessen Rohling einen genau kreisförmigen Querschnitt hat, nach dem Brennen nicht mehr kreisförmig.

Um diesem unerwünschten Effekt vorzubeugen ist erfindungsgemäß vorgesehen, den extrudierten Rohling so auszubilden, dass sein Querschnitt nach dem Extrudieren und vor dem Brennen gezielt von dem gewünschten Querschnitt des fertig gebrannten Filterelements abweicht. Dadurch können die beim Brennen entstehenden unterschiedlichen Schwindmaße kompensiert werden.

Bei dem Ausführungsbeispiel gemäß Figur 3 ist erfindungsgemäß vorgesehen, dass bei Umfangswinkeln von 0°, 90°, 180° und 270° der Radius R einen Maximalwert Rₘₐₓ annimmt, während er bei Werten des Umfangswinkels ϕ von 45°, 135°, 225° und 315° ein Minimum Rₘᵢₙ annimmt. Der Übergang zwischen dem maximalen Radius Rₘₐₓ und dem minimalen Radius Rₘᵢₙ erfolgt stufenlos, so dass der Rohling 36 den in Figur 3 dargestellten "kleeblattförmigen" Querschnitt aufweist.

Wenn man nun den Rohling 36 gemäß Figur 3 in an sich bekannter Weise einer Wärmebehandlung unterzieht, schwindet der Rohling beim Brennen unterschiedlich in Abhängigkeit des Umfangswinkels ϕ. Dadurch verschwindet die Kleeblattform und es entsteht ein Filterelement 18, welches die in Figur 4 dargestellte kreisrunde Querschnittsfläche hat.

Es versteht sich von selbst, dass die Erfindung nicht auf Filterelemente mit kreisrundem Endquerschnitt und Filterwänden 31, die einen Winkel von 90° zueinander einschließen, beschränkt ist, sondern bei nahezu allen Querschnittsgeometrien und Formen von Filterwänden erfolgreich eingesetzt werden kann.

## Patentansprüche

1. Verfahren zur Herstellung eines Filterelements, insbesondere zur Filterung von Abgasen einer Dieselbrennkraftmaschine, mit einer Eintrittsfläche (22) und mit einer Austrittsfläche (24), mit einer Vielzahl von Eintrittskanälen (28), und mit einer Vielzahl von Austrittskanälen (30), wobei die Eintrittskanäle (28) und die Austrittskanäle (30) durch eine Filterwand (31) aus einem offenporigen Material getrennt sind, wobei das Filterelement (18) durch Extrudieren und eine anschließende Wärmebehandlung hergestellt wird, **dadurch gekennzeichnet, dass** der extrudierte Rohling des Filterelements (18) an den Umfangswinkeln in denen die Filterwände (31) im Wesentlichen radial verlaufen, einen größeren Durchmesser (Rₘₐₓ) aufweist als an den Umfangswinkeln, in denen ein Radius (Rₘᵢₙ) im Wesentlichen entlang der Winkelhalbierenden zwischen den Filterwänden (31) verläuft, wobei der Unterschied zwischen dem größeren Radius (Rₘₐₓ) und dem kleinerem Radius (Rₘᵢₙ) so gewählt wird, dass das Filterelement (18) nach dem Brennen den gewünschten Querschnitt aufweist.

2. Verfahren nach Anspruch 1, **dadurch gekennzeichnet, dass** der gewünschte Querschnitt ein im Wesentlichen kreisförmiger Querschnitt ist, dass die Filterwände (31) einen Winkel von etwa 90° einschließen und dass der extrudierte Rohling (36) des Filterelements (18) an den Umfangswinkeln 0°, 90°, 180° und 270°, in denen die Filterwände (31) im Wesentlichen radial verlaufen, einen größeren Radius (Rₘₐₓ) aufweist als an den Umfangswinkeln (45°, 135°, 225° und 315°), in denen ein Radius (R) im Wesentlichen entlang der Winkelhalbierenden zwischen den Filterwänden (31) verläuft.

3. Verfahren nach Anspruch 1 oder 2, **dadurch gekennzeichnet, dass** ein Übergang zwischen den Umfangswinkeln (0°, 90°, 180° und 270°) mit einem größeren Radius (Rₘₐₓ) und den Umfangswinkeln (45°, 135°, 225° und 315°) mit kleinerem Radius (Rₘᵢₙ) stufenlos verläuft.

4. Verfahren nach einem der vorhergehenden Ansprüche, **dadurch gekennzeichnet, dass** die Eintrittskanäle (28) an der Eintrittsfläche (22) beginnen und an der Austrittsfläche (24) verschlossen sind und dass die Austrittskanäle (30) an der Eintrittsfläche (22) verschlossen sind und an der Austrittsfläche (24) enden.

5. Verfahren nach einem der vorhergehenden Ansprüche, **dadurch gekennzeichnet, dass** das Filterelement (18) aus einem keramischen Werkstoff, insbesondere aus Cordierit, hergestellt wird.

## Claims

1. Method for the production of a filter element, in particular for the filtration of exhaust gases of a diesel internal combustion engine, with an entry surface (22) and an exit surface (24), with a multiplicity of entry ducts (28) and with a multiplicity of exit ducts (30), the entry ducts (28) and exit ducts (30) being separated by a filter wall (31) composed of an open-pored material, the filter element (18) being produced by extrusion and subsequent heat treatment, **characterized in that** the extruded blank of the filter element (18) has a larger diameter (Rₘₐₓ) at the circumferential angles where the filter walls (31) run essentially radially than at the circumferential angles where a radius (Rₘᵢₙ) runs essentially along the angle bisector between the filter walls (31), the difference between the larger radius (Rₘₐₓ) and the smaller radius (Rₘᵢₙ) being selected so that the filter element (18) has the desired cross section after firing.

2. Method according to Claim 1, **characterized in that** the desired cross section is an essentially circular cross section, **in that** the filter walls (31) form an angle of about 90°, and **in that** the extruded blank (36) of the filter element (18) has a larger radius (Rₘₐₓ) at the circumferential angles 0°, 90°, 180° and 270° where the filter walls (31) run essentially radially than at the circumferential angles (45°, 135°, 225° and 315°) where a radius (R) runs essentially along the angle bisector between the filter walls (31).

3. Method according to Claim 1 or 2, **characterized in that** a transition between the circumferential angles (0°, 90°, 180° and 270°) having a larger radius (Rₘₐₓ) and the circumferential angles (45°, 135°, 225° and 315°) having a smaller radius (Rₘᵢₙ) runs continuously.

4. Method according to one of the preceding claims, **characterized in that** the entry ducts (28) commence at the entry surface (22) and are closed at the exit surface (24), and **in that** the exit ducts (30) are closed at the entry surface (22) and terminate at the exit surface (24).

5. Method according to one of the preceding claims, **characterized in that** the filter element (18) is produced from a ceramic material, in particular from cordierite.

## Revendications

1. Procédé de fabrication d'un élément filtrant, notamment pour la filtration de gaz d'échappement d'un moteur à combustion diesel, comprenant une surface d'entrée (22) et une surface de sortie (24), une pluralité de canaux d'entrée (28), et une pluralité de canaux de sortie (30), les canaux d'entrée (28) et les canaux de sortie (30) étant séparés par une paroi de filtre (31) en matériau à pores ouverts, l'élément filtrant (18) étant fabriqué par extrusion et par un traitement thermique subséquent, **caractérisé en ce que** la pièce brute extrudée de l'élément filtrant (18) présente, dans les angles périphériques suivant lesquels les parois de filtre (31) s'étendent essentiellement radialement, un rayon (Rₘₐₓ) plus grand que dans les angles périphériques suivant lesquels un rayon (Rₘᵢₙ) s'étend essentiellement le long de la bissectrice entre les parois de filtre (31), la différence entre le plus grand rayon (Rₘₐₓ) et le plus petit rayon (Rₘᵢₙ) étant choisie de telle sorte que l'élément de filtre (18) présente, après la cuisson, la section transversale souhaitée.

2. Procédé selon la revendication 1, **caractérisé en ce que** la section transversale souhaitée est une section transversale de forme essentiellement circulaire, **en ce que** les parois du filtre (31) forment un angle d'environ 90° et **en ce que** la pièce brute extrudée (36) de l'élément filtrant (18) présente, aux angles périphériques (0°, 90°, 180° et 270°), suivant lesquels les parois de filtre (31) s'étendent essentiellement radialement, un plus grand rayon (Rₘₐₓ) qu'aux angles périphériques (45°, 135°, 225° et 315°), suivant lesquels un rayon (R) s'étend essentiellement le long de la bissectrice entre les parois de filtre (31).

3. Procédé selon la revendication 1 ou 2, **caractérisé en ce qu'**une transition entre les angles périphériques (0°, 90°, 180° et 270°) avec un plus grand rayon (Rₘₐₓ) et les angles périphériques (45°, 135°, 225° et 315°) avec un plus petit rayon (Rₘᵢₙ) s'effectue de manière continue.

4. Procédé selon l'une quelconque des revendications précédentes, **caractérisé en ce que** les canaux d'entrée (28) commencent au niveau de la surface d'entrée (22) et sont fermés au niveau de la surface de sortie (24), et **en ce que** les canaux de sortie (30) sont fermés au niveau de la surface d'entrée (22) et se terminent au niveau de la surface de sortie (24).

5. Procédé selon l'une quelconque des revendications précédentes, **caractérisé en ce que** l'élément filtrant (18) est fabriqué en matériau céramique, notamment en cordiérite.
